# EUROPEAN PATENT SPECIFICATION

(11) **EP 3 272 948 B1**
(45) Date of publication and mention of the grant of the patent: **22.04.2020**
(21) Application number: 16764750.2
(22) Date of filing: 04.03.2016
(51) Int. Cl.: E02F 9/00, E02F 9/22, E02F 9/16

(54) **SUPPORT SHAFT MEMBER MOUNTING/DISMOUNTING STRUCTURE FOR WORKING MACHINE**
STÜTZSCHAFTELEMENTMONTAGE-/-DEMONTAGESTRUKTUR FÜR EINE ARBEITSMASCHINE
STRUCTURE DE MONTAGE/DÉMONTAGE D'ÉLÉMENT D'ARBRE DE SUPPORT POUR MACHINE DE TRAVAIL

(30) Priority: 17.03.2015 JP 2015053182
(43) Date of publication of application: 24.01.2018
(73) Proprietor: Yanmar Co., Ltd., Osaka-shi, Osaka 530-8311 (JP)
(72) Inventor: MIYAZAKI, Yoshihiro, Chikugo-shi Fukuoka 833-0055 (JP); IKEDA, Takahiro, Chikugo-shi Fukuoka 833-0055 (JP); KURODA, Takaaki, Chikugo-shi Fukuoka 833-0055 (JP); SEINO, Hideki, Chikugo-shi Fukuoka 833-0055 (JP)
(74) Representative: Fédit-Loriot
(86) International application number: PCT/JP2016/056897
(87) International publication number: WO 2016/147920

(56) References cited:
- EP-A1- 1 636 503
- EP-A1- 2 581 500
- WO-A1-2014/133002
- JP-A- 2003 042 139
- JP-A- 2005 290 727
- JP-A- 2008 019 620
- JP-A- 2010 106 522
- JP-A- 2013 234 470
- JP-A- 2016 069 864
- US-A- 4 002 377

## Description

### Technical Field

The present invention relates to a work vehicle including: work equipment that is provided with a rotation member whose proximal end portion is coupled to a rotatable support shaft member; a cabin disposed on one side of the work equipment; and a storage part disposed on the other side of the work equipment, and particularly relates to an installation and removal configuration for the support shaft member as exemplified by a boom fulcrum pin.

### Background Art

A work vehicle such as a backhoe conventionally includes a rotating platform that is supported on crawler-type traveling devices in such a manner that the rotating platform is rotatable left and right; a cabin disposed in one side region on the rotating platform, the cabin including a driver seat, various manipulation levers, a floor member, and the like; a storage part disposed in the other side region, the storage part storing a fuel tank, an oil tank, and the like; and work equipment provided between the storage part and the cabin, the work equipment including a boom, an arm, a bucket, and a cylinder configured to extend and retract for vertical and rotational movement of the boom, the arm, and the bucket (see PTL 1, for example).

In the work equipment, a pivot (hereinafter referred to as "boom fulcrum pin") of the boom is rotatably and horizontally laid between left and right vertical plates (hereinafter referred to as "boom brackets") standing on the rotating platform, and a cylindrical body to which a proximal end portion of the boom is fixed is fitted onto the boom fulcrum pin, so that the boom is provided on the rotating platform in a vertically rotatable manner.

### Citation List

### Patent Literature

PTL 1: Japanese Patent Application Laid-Open No. 2013-234470

### Summary of Invention

### Technical Problem

Since the boom bracket constitutes a base part of a side wall of the cabin, easy access from the cabin side to the boom fulcrum pin pivotally supported on the boom brackets is obtained, but on the other hand, an application to a conventional cabin is difficult, which leads to poor versatility because a large design change is required. Thus, there has been a problem that component parts cannot be standardized, so that stock management of the component parts is difficult, which leads to an increase in management costs and a deterioration in maintenance properties.

Moreover, in a normal configuration in which the boom bracket does not constitute the base part of the side wall of the cabin, to pull the boom fulcrum pin out of the cylindrical body for replacement of the boom fulcrum pin or detachment of the work equipment, insertion or extraction of the boom fulcrum pin is implemented after component parts disposed on the cabin side are removed, because a fuel tank, an oil tank, and the like, which should be handled with caution, are stored on the storage part side. This raises a problem that a working time taken for the replacement work and the detachment work is prolonged and a burden on an operator is increased.

### Solution to Problem

Problems to be solved by the present invention are as above, and solutions to the problems are acc. to the appended claims and will now be described.

In a first aspect, a work vehicle includes: work equipment including a rotation member whose proximal end portion is coupled to a rotatable support shaft member; a cabin disposed on one side of the work equipment; and a storage part disposed on the other side of the work equipment, wherein the work equipment and the cabin are provided as substantially separate members, and a side wall of the cabin on the work equipment side has a work hole opened therein, such that the support shaft member is installable and removable through the work hole by inserting and extracting the support shaft member from the cabin side into and out of a cylindrical body having the proximal end portion fixed thereto.

Furthermore a through hole is provided that radially penetrates through the support shaft member and a support body that rotatably supports the support shaft member on the storage part side, the through hole including a first through hole formed in the support shaft member and a second through hole formed in the support body; an anti-rotation member is provided that is insertable through a combination of the first through hole and the second through hole; and a visual check structure is provided that enables a reference rotation position to be visually checked from the cabin side through the work hole, the reference rotation position being a position that allows the anti-rotation member to be inserted.

In a second aspect, the visual check structure may include parallel opposed edge pairs arranged in at least two positions between an outer peripheral edge of a cabin-side end portion of the support shaft member and an inner peripheral edge of the work hole that surrounds the outer peripheral edge in a state where the first through hole is in the reference rotation position.

In a third aspect, an adjustment gap may be formed between the outer peripheral edge and the inner peripheral edge, the adjustment gap allowing the support shaft member to be rotated for fine adjustment of a rotation position of the first through hole with a visual check from the cabin side.

In a fourth aspect, an in-cabin apparatus disposed close to the work hole may be provided with a moving mechanism configured to move the in-cabin apparatus in a direction of opening the work hole.

### Advantageous Effects of Invention

The present invention, which is configured as above, exerts the following effects.

According to the first aspect, since the work equipment and the cabin are provided as substantially separate members, a configuration in which, for example, a boom bracket of the work equipment does not constitute a base part of the side wall of the cabin may make the work equipment applicable to a conventional cabin without requiring a large design change, thereby allowing component parts to be standardized, which can facilitate stock management of the component parts, resulting in reduction in management costs and improvement in maintenance properties. Moreover, at a time of replacement of the support shaft member of the work equipment or detachment of the work equipment, the work hole may provide easy access to the support shaft member from the cabin side without needing to remove either the storage part or the cabin, and thereby installation and removal can be implemented, thus shortening a working time taken for the replacement work or the detachment work and reducing a burden on an operator.

Further, the anti-rotation member may be provided on the storage part side which is remote from the cabin side in order that interference with an apparatus (hereinafter referred to as "in-cabin apparatus") such as an indoor unit of an air conditioner disposed in the cabin can be avoided. Therefore, even if a rotation position of the first through hole cannot be checked from the cabin side, the first through hole can be set in the reference rotation position merely by a visual check from the cabin side through the work hole, when assembling the support shaft member by inserting it into the cylindrical body. This may make it easy to set the position of the first through hole into the reference rotation position, to thereby enable shortening of a working time taken for an insertion work of inserting the support shaft member, reduction in a burden on an operator, and reduction in the number of operators.

According to the second aspect, the visual check structure can be formed of a simple configuration of just providing the parallel edge pairs on the outer peripheral edge and the inner peripheral edge. This may reduce the number of component parts, thus leading to reduction in component costs and improvement in maintenance properties.

According to the third aspect, if the rotation position of the first through hole is out of the reference rotation position, it may be possible to rotate the support shaft member with a margin corresponding to the adjustment gap. Thus, the insertion work of inserting the support shaft member can be easily performed, even when the machining accuracy, the assembling accuracy, or the like, is insufficient.

According to the fourth aspect, even in a case where the in-cabin apparatus disposed close to the work hole makes access to the work hole difficult, the in-cabin apparatus can be easily removed from a front of the work hole, thus enabling further improvement in workability for various works including the replacement work of replacing the support shaft member, the detachment work of detaching the work equipment, and the like.

### Brief Description of Drawings

[FIG. 1] A left side view showing an overall configuration of a backhoe according to the present invention.
[FIG. 2] A front elevational view of the same.
[FIG. 3] A plan view of the same.
[FIG. 4] A perspective view when viewed from the cabin side toward the tank unit side.
[FIG. 5] A perspective view showing a boom shaft part, a cylinder shaft part, and therearound.
[FIG. 6] A perspective view of a right side wall and therearound, in a case where a unit body of an indoor unit of an air conditioner is in its initial position.
[FIG. 7] A perspective view of the right side wall and therearound, in a case where the unit body of the indoor unit of the air conditioner is rotated leftward about a front-rear shaft center.
[FIG. 8] A left side view of a work hole for a boom fulcrum pin.
[FIG. 9] A partial cross-sectional rear view with the boom fulcrum pin attached.
[FIG. 10] A partial cross-sectional side view with an anti-rotation pin attached.
[FIG. 11] Partial cross-sectional rear views with the boom fulcrum pin being taken out of a cylindrical body, of which FIG. 11(a) is a partial cross-sectional rear view of the boom fulcrum pin from which the anti-rotation pin is extracted, and FIG. 11(b) is a partial cross-sectional rear view of the boom fulcrum pin being inserted to or extracted from a cylindrical body.
[FIG. 12] A perspective view of the right side wall and therearound, in a case where the unit body of the indoor unit of the air conditioner is rotated rearward about a vertical shaft center.
[FIG. 13] A perspective view of a work hole for a cylinder fulcrum pin.
[FIG. 14] A partial cross-sectional rear view with the cylinder fulcrum pin attached.
[FIG. 15] Partial cross-sectional rear views with the cylinder fulcrum pin being taken out of the cylindrical body, of which FIG. 15(a) is a partial cross-sectional rear view of the cylinder fulcrum pin from which an anti-extraction pin is extracted, and FIG. 15(b) is a partial cross-sectional rear view of the cylinder fulcrum pin being inserted to or extracted from the cylindrical body.

### Description of Embodiments

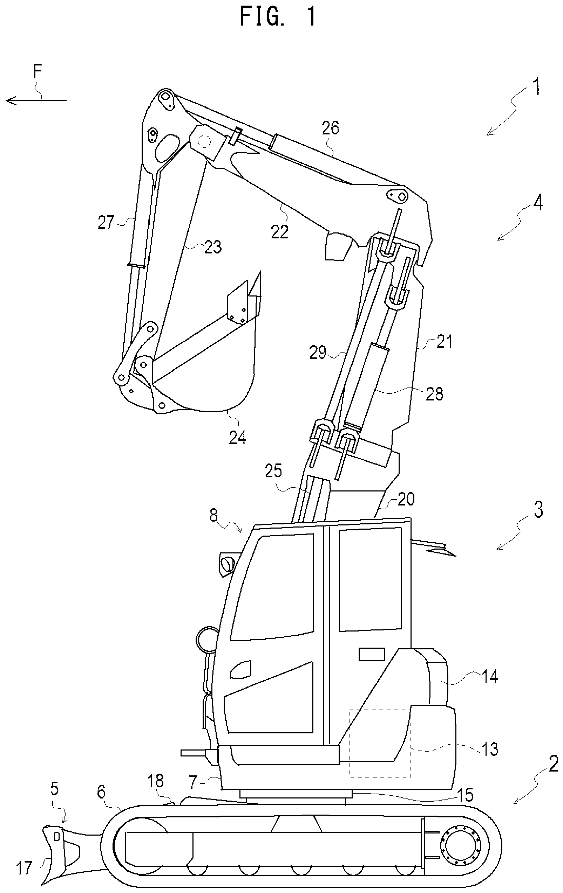

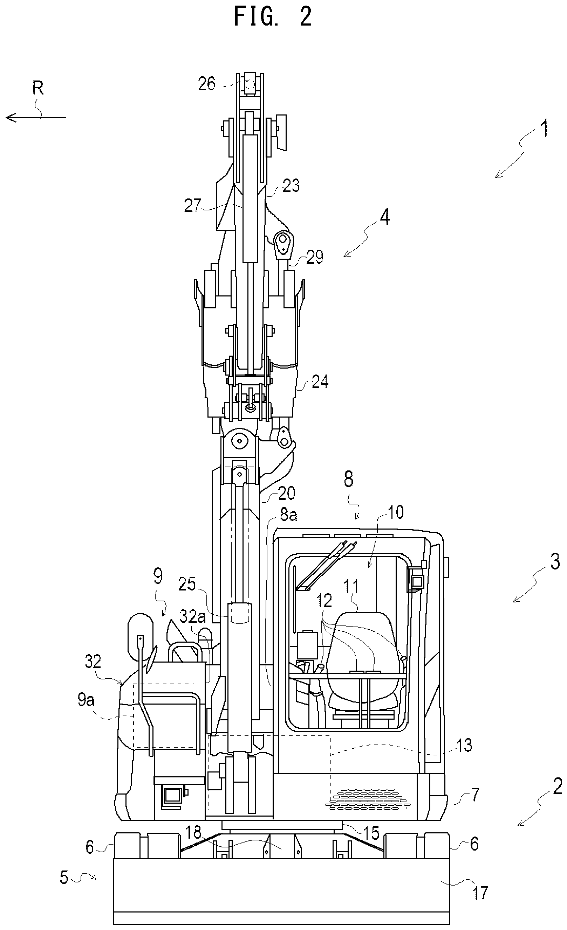

In the following, an embodiment of the present invention will be described in detail. A direction indicated by an arrow F in FIG. 1 is defined as a frontward direction of a backhoe 1 serving as a work vehicle, and a direction indicated by an arrow R in FIG. 2 is defined as a rightward direction of the backhoe 1. Positions, directions, and the like, of members in the following description are based on these frontward and right directions.

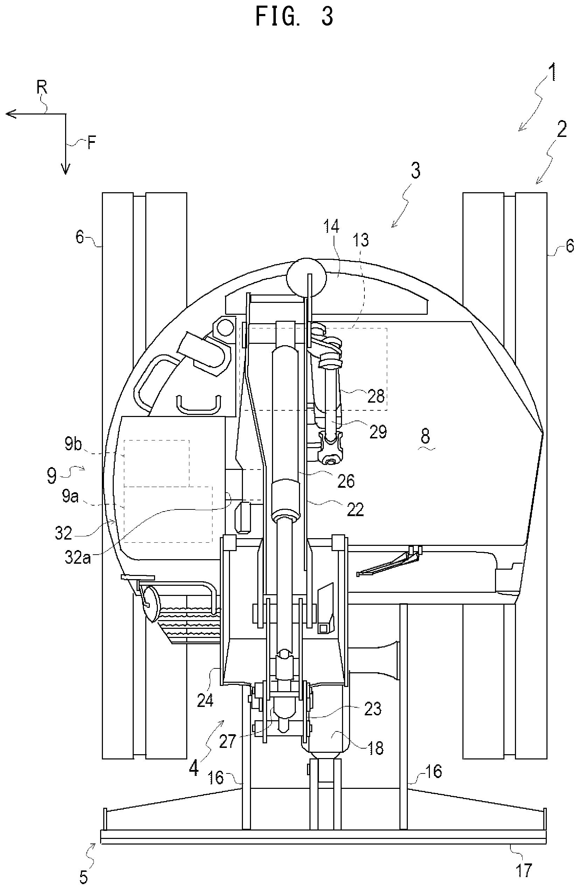

First, an overall configuration of the backhoe 1 according to the present invention will be described based on FIG. 1 to FIG. 3.

The backhoe 1, which is a rotating-type work vehicle, includes: a traveling unit 2 having a pair of left and right crawler-type traveling devices 6; a machine body 3 that is supported on a base platform 15 provided in a center portion above the traveling unit 2 in such a manner that the machine body 3 is rotatable left and right; excavator equipment 4 that is attached to a substantially center portion of the machine body 3 with respect to the lateral (left-right) direction; and an earth removing device 5 that is attached to a front portion of the crawler-type traveling devices 6.

In the machine body 3, a cabin 8 that covers a driving operation unit 10 including a driver seat 11, various manipulation levers 12, and the like, is disposed in one side portion, which means a left side portion in this example, above a rotating platform 7 that is provided on the base platform 15 so as to be rotatable left and right, while the excavator equipment 4 and a tank unit 9 arranged in this order from the left are disposed to the right of the cabin 8.

An engine 13 is mounted in a region extending from the rear side of the excavator equipment 4 to a rear portion of the cabin 8. The rear, left, and right sides of the engine 13 are covered by a hood 14. The tank unit 9 houses a fuel tank 9a for the engine 13 and an oil tank 9b of a hydraulic oil for the excavator equipment 4 and the earth removing device 5.

The excavator equipment 4 includes: a first boom 20 attached to the rotating platform 7 in a vertically rotatable manner; a second boom 21 attached to a distal end portion of the first boom 20 in a laterally rotatable manner; a third boom 22 attached to the second boom 21 in a laterally rotatable manner; an arm 23 attached to the third boom 22 in a vertically rotatable manner; and a bucket 24 serving as a working attachment attached to the distal end of the arm 23, the excavator equipment 4 being configured to allow the arm 23 and the bucket 24 to be laterally offset by lateral rotation of the second boom 21.

The first boom 20 is capable of vertical and rotational movement by extending and retracting a boom cylinder 25. The arm 23 is capable of vertical and rotational movement by extending and retracting an arm cylinder 26. The bucket 24 is capable of vertical and rotational movement by extending and retracting a bucket cylinder 27.

The second boom 21 has its lower end portion coupled to an upper end portion of the first boom 20 in a laterally rotatable manner. The second boom 21 has its upper end portion coupled to a lower end portion of the third boom 22 in a laterally rotatable manner. An offset cylinder 28 is interposed between the first boom 20 and the second boom 21. An offset rod 29 is provided so as to extend between the first boom 20 and the third boom 22.

Extension and retraction of the offset cylinder 28 causes the third boom 22 to be eccentric relative to the first boom 20, thus obtaining lateral offset thereof. In this case, the offset is obtained while the angle formed between the first boom 20 and the third boom 22 is unchanged and they are kept in parallel.

The earth removing device 5 includes: a pair of left and right blade arms 16, 16 extending in a front-rear direction and provided between the pair of left and right crawler-type traveling devices 6, the pair of left and right blade arms 16, 16 having their respective proximal end portions coupled to the base platform 15 in a vertically rotatable manner; and a blade 17 extending in a lateral direction and provided between distal end portions of the respective blade arms 16, 16. Furthermore, a blade cylinder 18 is interposed between the base platform 15 and a substantially center portion of the blade 17 with respect to the lateral direction in such a manner that the blade cylinder 18 is extendable and retractable so that the blade 17 is vertically swingable.

In such a configuration, the driving operation unit 10 operates the traveling unit 2 to travel in translation in the front-rear direction and travel in rotation in the left-right direction, operates the excavator equipment 4 to perform an excavating work, and operates the earth removing device 5 to perform an earth removing work.

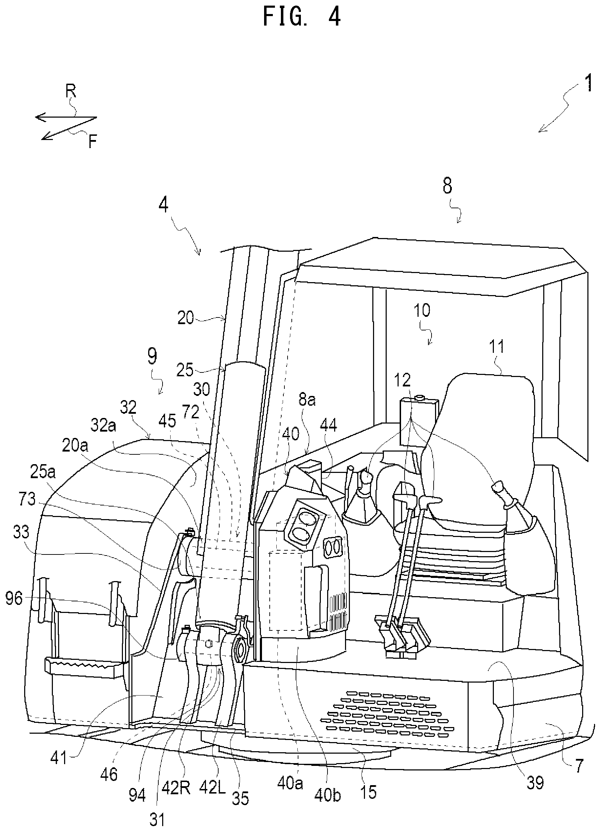

Next, an attachment configuration between the first boom 20 and the boom cylinder 25 of the excavator equipment 4, and the like, will be schematically described based on FIG. 4 to FIG. 7, FIG. 9, and FIG. 14.

The first boom 20 has its proximal end portion 20a coupled to a boom shaft part 30, and the boom shaft part 30 is horizontally laid between a left covering 32a of the tank unit 9 and a right side wall 8a of the cabin 8.

The left covering 32a is a member forming a left side surface part of a covering body 32 that covers the tank unit 9. A left vertical plate 33 and a right vertical plate 34, which are arranged side by side with the left covering 32a interposed therebetween, are provided on left and right side surfaces of the left covering 32a such that their plate surfaces are oriented in the lateral direction. The left vertical plate 33 and the right vertical plate 34 are arranged so as to fixedly stand on a rotating basal plate 35 which constitutes a lower part of a frame unit of the rotating platform 7. The left vertical plate 33 and the right vertical plate 34 are configured to rotatably and tightly support a right end portion of the boom shaft part 30.

The right side wall 8a, which is a member constituting a lower half of a right side surface of the cabin 8, includes a first covering 37 provided on the tank unit 9 side and a second covering 38 provided on the cabin 8 side, both of which are arranged so as to stand on a plate-like floor member 39 of the driving operation unit 10. A vertical plate 36 which is a separate piece is incorporated in a gap between the first covering 37 and the second covering 38, such that its plate surfaces are oriented in the lateral direction. The vertical plate 36 as well as the left vertical plate 33 and the right vertical plate 34 is arranged so as to fixedly stand on the rotating basal plate 35. The vertical plate 36 is configured to rotatably and tightly support a left end portion of the boom shaft part 30.

The boom cylinder 25 has its proximal end portion 25a coupled to a cylinder shaft part 31, and the cylinder shaft part 31 is horizontally laid between left and right cylinder brackets 42L, 42R.

The cylinder brackets 42L, 42R are arranged so as to fixedly stand on an upper surface of a support plate 41 such that its plate surfaces are oriented in the lateral direction. The support plate 41 is arranged above the rotating basal plate 35 and between the cabin 8 and the tank unit 9, so as to extend obliquely upward toward the rear from a front portion of the rotating basal plate 35. The cylinder brackets 42L, 42R are configured to rotatably and tightly support left and right end portions of the cylinder shaft part 31.

The first covering 37 includes a sheet portion 37a and a bent edge portion 37b, the sheet portion 37a being in the shape of a flat plate with its plate surfaces oriented in the lateral direction, the bent edge portion 37b being formed by bending an upper peripheral edge of the sheet portion 37a toward the cabin 8. An outdoor air inlet port 37a1 having a rectangular shape is opened in a front upper portion of the sheet portion 37a.

On the tank unit 9 side of the outdoor air inlet port 37a1, an outdoor air inlet covering 43 is arranged so as to provide a covering, while on the cabin 8 side of the outdoor air inlet port 37a1, a duct 44 having a thin box-like shape is provided in a posture inclined obliquely downward toward the rear. A lower portion of the duct 44 communicates with the outdoor air inlet port 37a1, and an upper portion of the duct 44 has an outdoor air inlet port 44a that communicates with the inside of the cabin 8.

This allows outdoor air surrounding the excavator equipment 4 to be introduced into the cabin 8 through the outdoor air inlet covering 43, the outdoor air inlet port 37a1, the duct 44, and the outdoor air inlet port 44a.

The second covering 38, which is arranged in a lower rear region on a left side surface of the sheet portion 37a of the first covering 37, includes a sheet portion 38a and an outer peripheral edge portion 38b, the sheet portion 38a being laterally bent at a plurality of positions along vertically extending bending lines 103, 104, the outer peripheral edge portion 38b covering a peripheral edge of the sheet portion 38a.

The outer peripheral edge portion 38b has its right end coupled to the left side surface of the sheet portion 37a of the first covering 37, and the sheet portion 38a is provided with a rear side plate 38a1, an inclined side plate 38a2, and a front side plate 38a3 arranged in this order from the rear, the rear side plate 38a1 having its plate surfaces oriented in the lateral direction, the inclined side plate 38a2 extending in a posture inclined obliquely rightward toward the front from the bending line 103 as a boundary, the front side plate 38a3 extending frontward again from the bending line 104 as a boundary such that plate surfaces of the front side plate 38a3 are oriented in the lateral direction.

The sheet portion 38a of the second covering 38 has work holes 49, 50 for insertion and extraction of a boom fulcrum pin 45 of the boom shaft part 30 and a cylinder fulcrum pin 46 of the cylinder shaft part 31, which will be detailed later, so that the boom fulcrum pin 45 and the cylinder fulcrum pin 46 can be easily installed and removed through the work holes 49, 50 from the cabin 8 side.

In addition, an indoor unit 40 of an air conditioner is disposed near and to the left of the sheet portion 38a.

A unit body 40a provided in the indoor unit 40 of the air conditioner is configured to be rotated away from the work holes 49, 50 by a moving mechanism 68.

The moving mechanism 68 will now be described based on FIG. 4, FIG. 6, FIG. 7, FIG. 12, and FIG. 13.

To move the unit body 40a away from the work holes 49, 50, firstly, in the driving operation unit 10, the driver seat 11 is moved rearward, and then a device covering 40b is detached from the indoor unit 40 of the air conditioner so that the unit body 40a is exposed.

A vertically elongated fixed stay 52 is provided on and protrudes from a front side surface 40a1 of the unit body 40a, and a box-shaped fixed frame 54 whose front face is opened protrudes leftward from a front edge of the sheet portion 37a of the first covering 37.

Accordingly, placing fixed holes 52a, 52a formed at the vertical ends of the fixed stay 52 so as to overlap threaded holes 54a, 54a formed at the vertical ends of a left side surface of the fixed frame 54, and then threadedly inserting bolts 53, 53 into the threaded holes 54a, 54a via the fixed holes 52a, 52a, allows the fixed stay 52 to be fastened to the fixed frame 54, so that a front portion of the unit body 40a is removably secured to the sheet portion 37a of the first covering 37.

A front support frame 55 and a rear support frame 56 are provided so as to stand on a right front portion and a right rear portion of the floor member 39. A top portion 55a of the front support frame 55 has its front end fixed to a rear surface 54b of the fixed frame 54 and its right end fixed to the sheet portion 37a of the first covering 37, while a top portion 56a of the rear support frame 56 has its right end fixed to the rear side plate 38a1 of the sheet portion 38a of the second covering 38, so that both the front support frame 55 and the rear support frame 56 are tightly supported on the right side wall 8a.

The front support frame 55 and the rear support frame 56 have inclined sides 55b, 56b, respectively, which are inclined obliquely downward toward the left. Vertically in the middle of the inclined sides 55b, 56b, a front support portion 58 and a rear support portion 59 are provided so as to protrude obliquely upward toward the left. On a bottom surface 40a2 of the unit body 40a, on the other hand, a front support stay 60 and a rear support stay 61 are provided so as to suspend at front and rear positions in a substantially central region with respect to the shorter side direction.

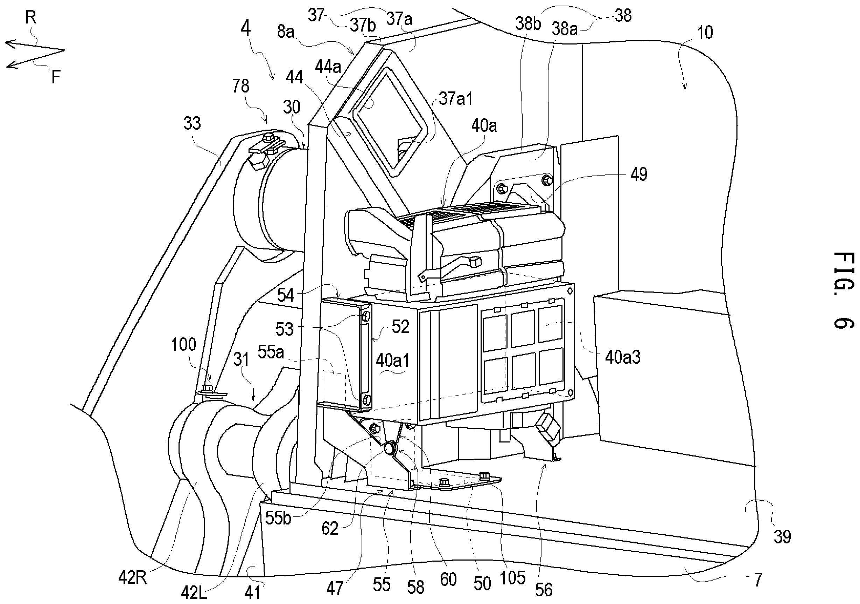

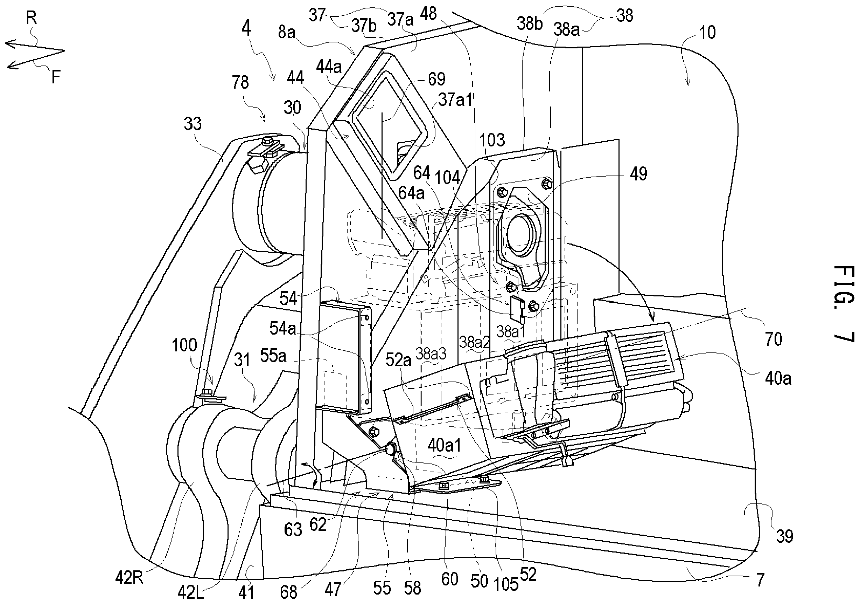

Accordingly, placing a shaft hole 60a of the front support stay 60 so as to overlap a shaft hole 58a of the front support portion 58, inserting a fulcrum bolt 62 therethrough, placing a shaft hole 61a of the rear support stay 61 so as to overlap a shaft hole 59a of the rear support portion 59, and inserting the fulcrum bolt 62 therethrough, results in formation of a rotational support structure 47 capable of rotating the unit body 40a around a front-rear shaft center 63 that passes through the shaft holes 58a, 60a, 59a, and 61a, as shown in FIG. 6 and FIG. 7.

Vertical hinge plates 64a, 65a are provided so as to protrude leftward from a left side surface of the rear side plate 38a1 of the sheet portion 38a of the second covering 38, while vertical hinge plates 64b, 65b are provided so as to protrude rearward from a rear side surface 40a3 of the unit body 40a. The hinge plates 64b, 65b are removably coupled to the hinge plates 64a, 65a, respectively, by a shared hinge pin 66.

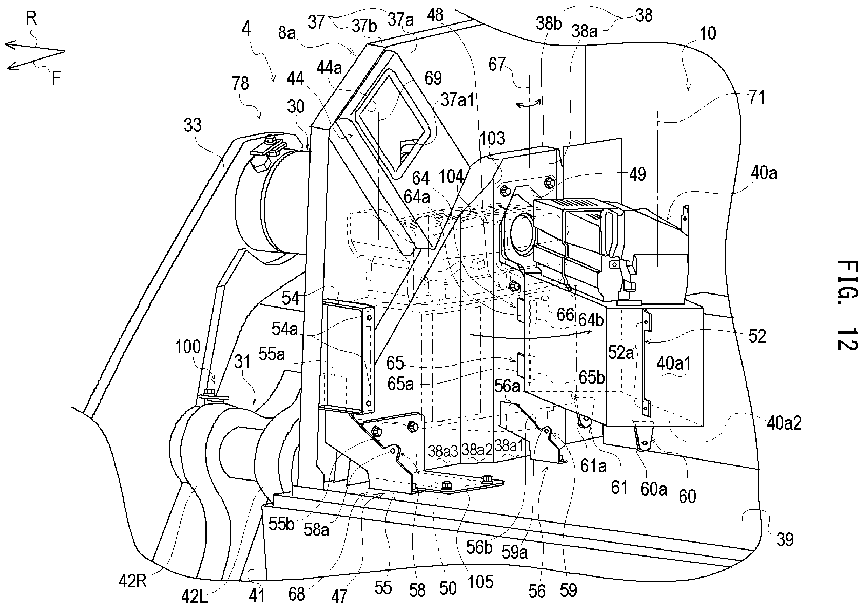

Thus, with a hinge 64 made up of the hinge plates 64a, 64b coupled to each other by the hinge pin 66 and a hinge 65 made up of the hinge plates 65a, 65b coupled to each other by the same hinge pin 66, a rotational support structure 48 capable of rotating the unit body 40a is formed around a vertical shaft center 67 that passes through a pin shaft center of the hinge pin 66, as shown in FIG. 6 and FIG. 12.

To move the unit body 40a of the indoor unit 40 of the air conditioner away from the work hole 49 by the moving mechanism 68 including the rotational support structures 47, 48 described above, the bolts 53, 53 are loosened and the fixed stay 52 is detached from the fixed frame 54, to disconnect the front portion of the unit body 40a from the sheet portion 37a of the first covering 37.

In addition, the hinge pin 66 of the rotational support structure 48 is pulled out, to decouple the hinge plates 64a, 64b from each other and the hinge plates 65a, 65b from each other, so that a rear portion of the unit body 40a is disconnected from the sheet portion 38a of the second covering 38.

In this state, as shown in FIG. 7, the unit body 40a is rotated about the front-rear shaft center 63 and thereby moved from a position 69 to a position 70, in a direction of opening the work hole 49 which means the leftward direction in this example, thus enabling the unit body 40a to be largely away from the work hole 49.

To move the unit body 40a of the indoor unit 40 of the air conditioner away from the work hole 50 as well as the work hole 49, the bolts 53, 53 are loosened and the front portion of the unit body 40a is disconnected from the sheet portion 37a of the first covering 37.

In addition, the fulcrum bolt 62 of the rotational support structure 47 is loosened and extracted, to decouple the front support portion 58 from the front support stay 60 and the rear support portion 59 from the rear support stay 61, so that a lower portion of the unit body 40a is disconnected from the floor member 39 of the driving operation unit 10.

In this state, as shown in FIG. 12, the unit body 40a is rotated about the vertical shaft center 67 and thereby moved from the position 69 to the position 71, in a direction of opening the work hole 50 which means the rearward direction in this example, thus enabling the unit body 40a to be largely away from the work hole 50.

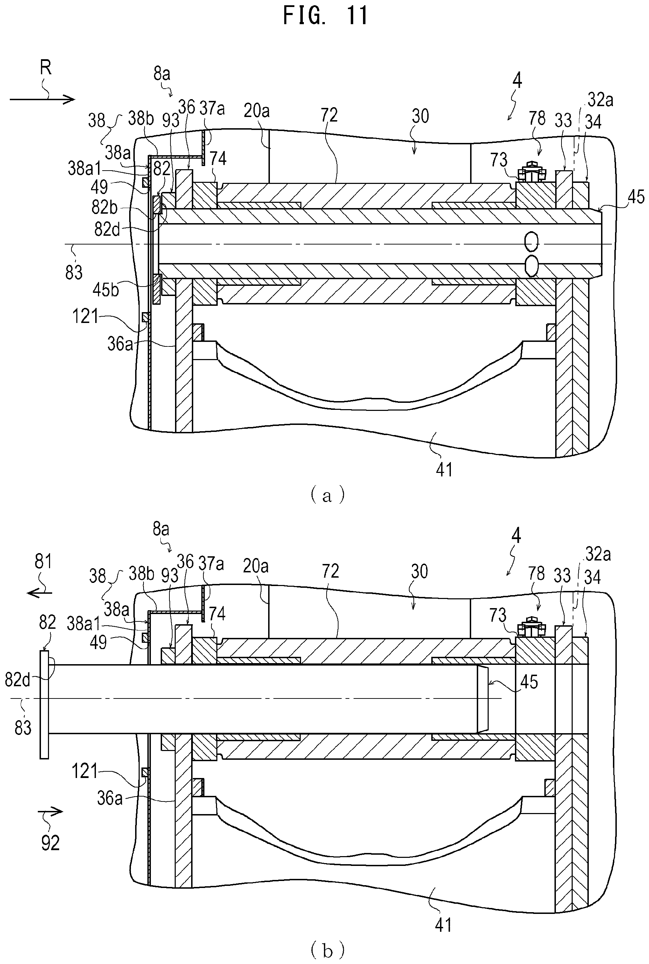

Next, a structure of the boom shaft part 30 and an installation and removal configuration for the boom fulcrum pin 45 which is a support shaft member of the boom shaft part 30 will be described based on FIG. 6 to FIG. 11.

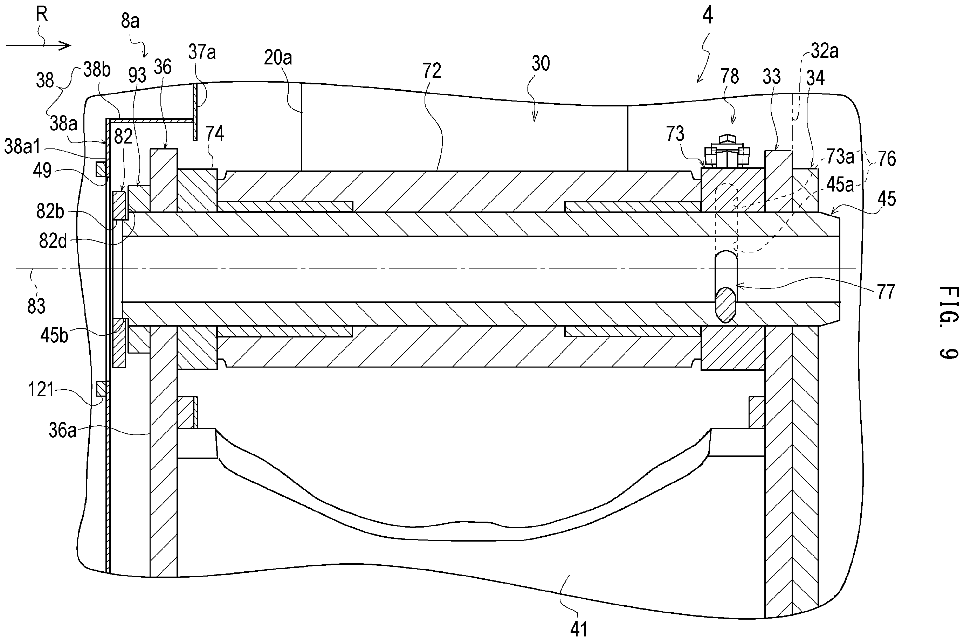

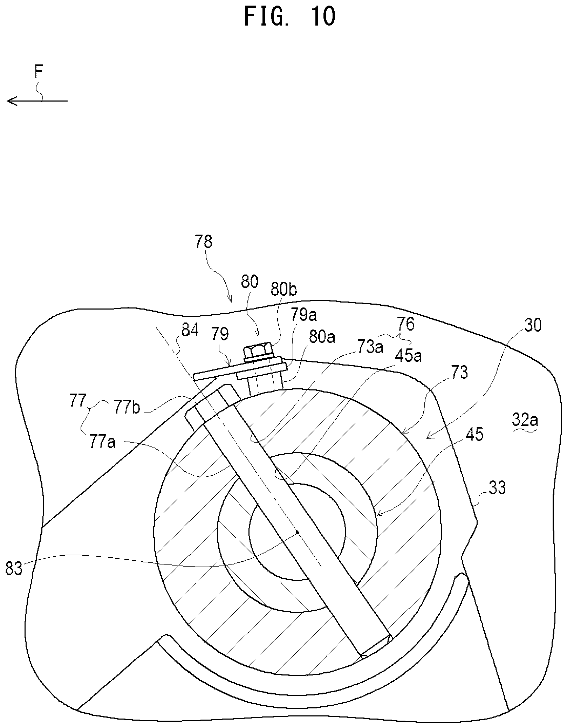

As shown in FIG. 9 and FIG. 10, the boom shaft part 30 is configured with the boom fulcrum pin 45 penetrating through a shaft center 83 of a cylindrical body 72 to which the proximal end portion 20a of the first boom 20 is fixed.

The right end of the boom fulcrum pin 45 penetrates through a right ring 73, the left vertical plate 33 with the right ring 73 secured to a left side surface thereof, and the right vertical plate 34, to protrude toward the tank unit 9, while the left end of the boom fulcrum pin 45 penetrates through a left ring 74 and the vertical plate 36 with the left ring 74 secured to a right side surface thereof, to protrude toward the cabin 8.

A first through hole 45a and a second through hole 73a having the same inner diameter are formed in the boom fulcrum pin 45 and the right ring 73, respectively. For an excavating work, a pin body 77a of an anti-rotation pin 77 is inserted through a through hole 76 formed by a combination of the first through hole 45a and the second through hole 73a. As a result, the boom fulcrum pin 45 is fixed to the right ring 73.

In this manner, the cylindrical body 72 to which the proximal end portion 20a of the first boom 20 is fixed is fitted onto an outer circumferential surface of the boom fulcrum pin 45 and supported such that it is freely rotatable concentrically with the boom fulcrum pin 45.

The pin body 77a of the anti-rotation pin 77 has, at its one end, a pin head portion 77b whose diameter is larger than that of the pin body 77a. The pin head portion 77b protrudes beyond an outer circumferential surface of the right ring 73, and an anti-dropout structure 78 is provided near the pin head portion 77b.

The anti-dropout structure 78 includes a restriction plate 79 and a fixture 80, the restriction plate 79 having its distal end portion extending to the radially outside of the pin head portion 77b of the anti-rotation pin 77, the fixture 80 fixing a proximal portion of the restriction plate 79 to an outer circumference of the right ring 73.

The restriction plate 79 is stacked on an upper end surface of a nut 80a of the fixture 80 fixed to the outer circumferential surface of the right ring 73, the restriction plate 79 including a bottom end portion 79a that serves to prevent the nut 80a from rotating. A bolt 80b is threadedly inserted through the restriction plate 79 and the nut 80a, into the right ring 73.

Thus, even when the anti-rotation pin 77 almost drops out of the through hole 76 as a result of being rotated by, for example, vibrations caused in traveling or working, the pin head portion 77b comes into abutment with a bottom surface of the restriction plate 79, so that radially outward movement is restricted, which can prevent the anti-rotation pin 77 from dropping out.

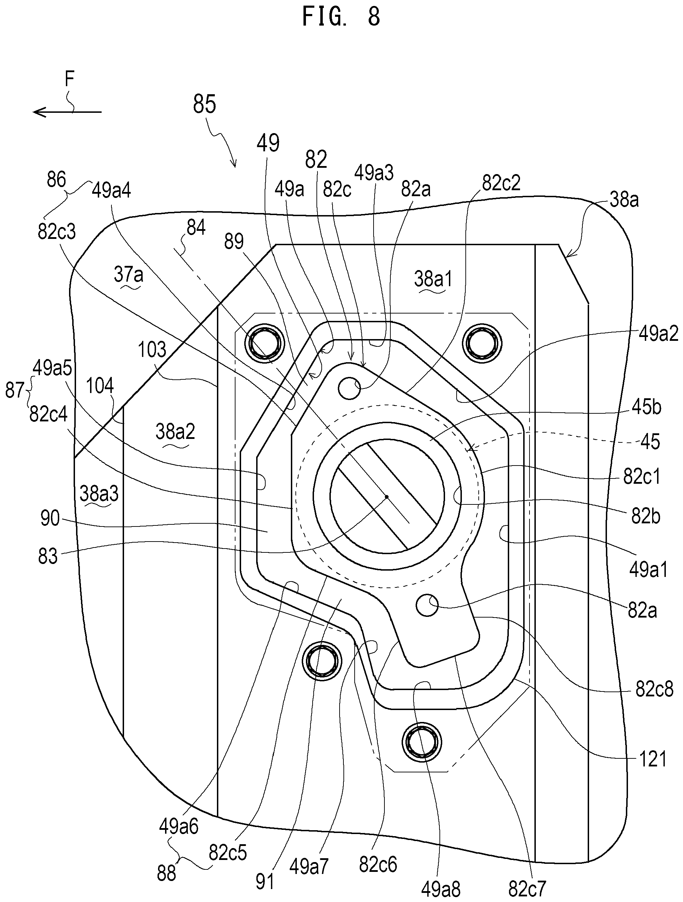

In the boom shaft part 30 having such a configuration, a pin operation plate 82 for use in installation and removal of the boom fulcrum pin 45 is fitted onto and fixed to the end of the boom fulcrum pin 45 protruding toward the cabin 8, as shown in FIG. 8 to FIG. 10.

In a side view, the pin operation plate 82 has, in a substantially central portion thereof, a fitting hole 82b for a small-diameter left end portion 45b of the boom fulcrum pin 45 to be inserted and fitted therein so that the pin operation plate 82 is coupled and fixed to the boom fulcrum pin 45, and also has engagement holes 82a, 82a on opposite sides of the fitting hole 82b with respect to the radial direction. A pin operation jig (not shown) is engaged with the engagement holes 82a, 82a, to allow the boom fulcrum pin 45 to be pushed or pulled along the shaft center 83, or to be rotated about the shaft center 83.

On an outer peripheral edge 82c of the pin operation plate 82, a single arc-shaped outer edge 82c1 and a first straight outer edge 82c2 to a seventh straight outer edge 82c8 which are a plurality of straight line portions are formed in this order counterclockwise in a left side view.

In the sheet portion 38a of the second covering 38, the work hole 49 is opened in the rear side plate 38a1 of the sheet portion 38a. In a left side view, the work hole 49 is formed so as to enclose the pin operation plate 82. On an inner peripheral edge 49a of the work hole 49, a first straight inner edge 49a1 to an eighth straight inner edge 49a8 which are a plurality of straight line portions are formed in this order counterclockwise in a left side view.

The second through hole 73a is preliminarily set in a predetermined rotation position (hereinafter referred to as "reference rotation position") 84 where dropout of the anti-rotation pin 77 due to gravity does not occur.

Moreover, setting is made such that, until the first through hole 45a reaches the reference rotation position 84, rotation of the boom fulcrum pin 45 makes the first through hole 45a and the second through hole 73a combined to allow the anti-rotation pin 77 to be inserted therethrough, and also makes a parallel state between the second straight outer edge 82c3 and the fourth straight inner edge 49a4 opposed to each other, between the third straight outer edge 82c4 and the fifth straight inner edge 49a5 opposed to each other, and between the fourth straight outer edge 82c5 and the sixth straight inner edge 49a6 opposed to each other.

Thus, the boom fulcrum pin 45 is automatically set in the reference rotation position 84 by rotating the boom fulcrum pin 45 from the cabin 8 side through the work hole 49 while visually checking the pin operation plate 82 which locates on the near side until forming a parallel edge pair 86 of the second straight outer edge 82c3 and the fourth straight inner edge 49a4, a parallel edge pair 87 of the third straight outer edge 82c4 and the fifth straight inner edge 49a5, and a parallel edge pair 88 of the fourth straight outer edge 82c5 and the sixth straight inner edge 49a6. Although this example provides a visual check structure 85 including three parallel edge pairs 86, 87, and 88, the number of parallel edge pairs is not limited because it is possible to define the rotation position of the pin operation plate 82 as long as at least two parallel edge pairs are provided.

On the left side surface of the rear side plate 38a1, a rim member 121 for sealing purpose is provided along the inner peripheral edge 49a of the work hole 49.

The parallel edge pairs 86, 87, and 88 have adjustment gaps 89, 90, and 91, respectively, formed between the outer peripheral edge 82c of the pin operation plate 82 and the inner peripheral edge 49a of the work hole 49.

Accordingly, even in a case where the pin operation plate 82 is rotated to form the parallel edge pairs 86, 87, and 88 but the boom fulcrum pin 45 cannot be set in the reference rotation position 84 because of an insufficient machining accuracy, an insufficient assembling accuracy, or the like; it is possible to combine the first through hole 45a and the second through hole 73a so as to allow the anti-rotation pin 77 to be inserted therethrough, by making fine adjustment of the rotation position by additionally rotating the pin operation plate 82 in the front-rear direction to a degree corresponding to the adjustment gaps 89, 90, and 91 while visually checking the pin operation plate 82 from the cabin 8 side through the work hole 49.

In the above-described configuration, to detach the boom shaft part 30 pivotally supporting the proximal portion of the first boom 20, which is horizontally laid between the left covering 32a of the tank unit 9 and the right side wall 8a of the cabin 8 provided on the rotating platform 7, the boom fulcrum pin 45 is pulled out of the cylindrical body 72 of the boom shaft part 30, thus enabling detachment of the boom shaft part 30 horizontally laid between the left covering 32a and the right side wall 8a, that is, the proximal portion of the first boom 20. At this time, before the boom fulcrum pin 45 is pulled out, the following pre-operation is performed.

Referring to FIG. 6 and FIG. 7, the driver seat 11 is moved rearward, and then the device covering 40b is detached from the indoor unit 40 of the air conditioner so that the unit body 40a is exposed, as mentioned above. After the bolts 53, 53 of the fixed stay 52 of the unit body 40a are loosened and detached, the unit body 40a is rotated leftward about the front-rear shaft center 63 and thereby moved from the position 69 to the position 70 through the rotational support structure 47 of the moving mechanism 68, so that the unit body 40a is away from the work hole 49.

In other words, to facilitate an operation of horizontally pulling the boom fulcrum pin 45 out to the left, the left side of the work hole 49 is opened so as to ensure a space wider than the entire length of the boom fulcrum pin 45, to thereby prevent the unit body 40a from obstructing the pull-out of the boom fulcrum pin 45.

Thereafter, as shown in FIG. 8, FIG. 10, and FIG. 11, the bolt 80b of the fixture 80 is loosened, and the restriction plate 79 is detached to ensure a space in the radially outside of the pin head portion 77b of the anti-rotation pin 77. Then, the pin head portion 77b is gripped, and the anti-rotation pin 77 is extracted from the through hole 76.

While the pin operation jig is engaged with the engagement holes 82a, 82a of the pin operation plate 82, the pin operation plate 82 is drawn out through the work hole 49 in a direction indicated by an arrow 81, so that the boom fulcrum pin 45 can be pulled out of the cylindrical body 72 of the boom shaft part 30 toward the cabin 8.

On the other hand, to assemble the boom fulcrum pin 45 by inserting it into the cylindrical body 72 of the boom shaft part 30, in the same manner as when taking it out of the cylindrical body 72, the unit body 40a is firstly moved away from the work hole 49 by means of the rotational support structure 47. Thus, the unit body 40a is kept from obstructing an insertion work of inserting the boom fulcrum pin 45 into the cylindrical body 72.

Then, while the pin operation jig is engaged with the engagement holes 82a, 82a of the pin operation plate 82, the pin operation plate 82 is pushed and moved in a direction indicated by an arrow 92 through the work hole 49, to insert the boom fulcrum pin 45 into the cylindrical body 72 until a right side surface 82d of the pin operation plate 82 comes close to an adjustment ring 93 secured to a left side surface 36a of the vertical plate 36, as shown in FIG. 8, FIG. 10, and FIG. 11.

Then, while the pin operation plate 82 which locates on the near side is being visually checked from the cabin 8 side through the work hole 49, the boom fulcrum pin 45 is rotated about the shaft center 83 by using the pin operation jig until the parallel edge pairs 86, 87, and 88 are formed, thereby setting the first through hole 45a in the reference rotation position 84. As a result, the first through hole 45a and the second through hole 73a are combined to form the through hole 76, and inserting the anti-rotation pin 77 into the through hole 76 provides prevention of rotation of the boom fulcrum pin 45.

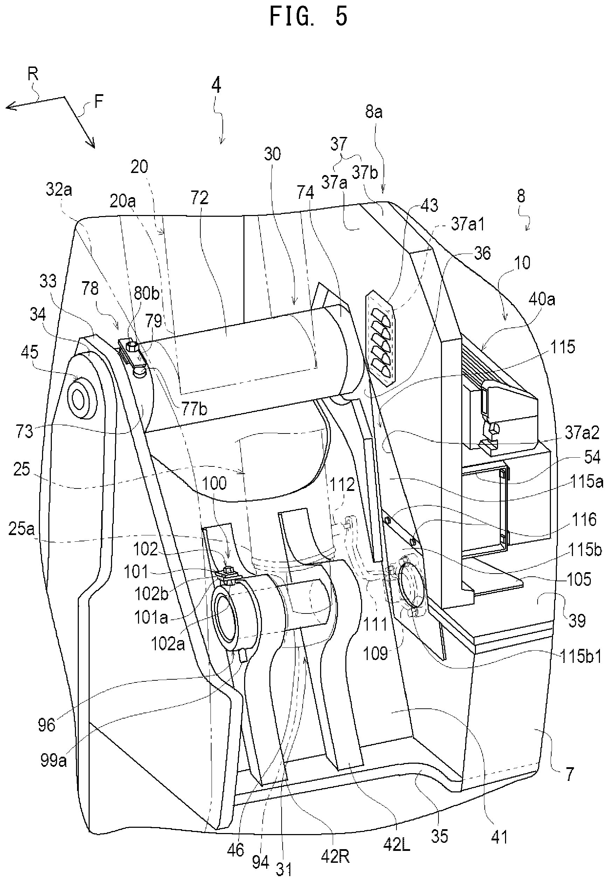

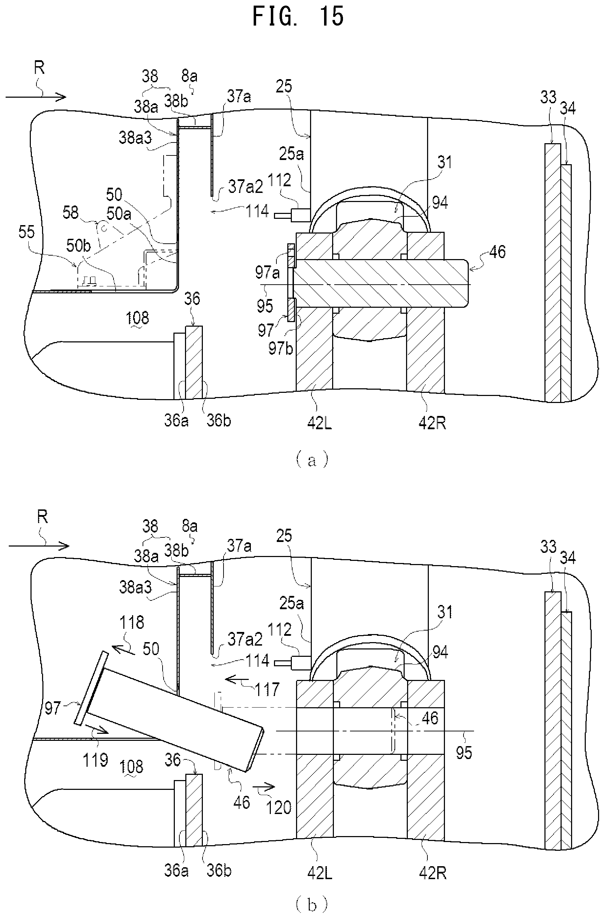

Next, a structure of the cylinder shaft part 31 and an installation and removal configuration for the cylinder fulcrum pin 46 which is a support shaft member of the cylinder shaft part 31 will be described based on FIG. 5, FIG. 6, and FIG. 12 to FIG. 15.

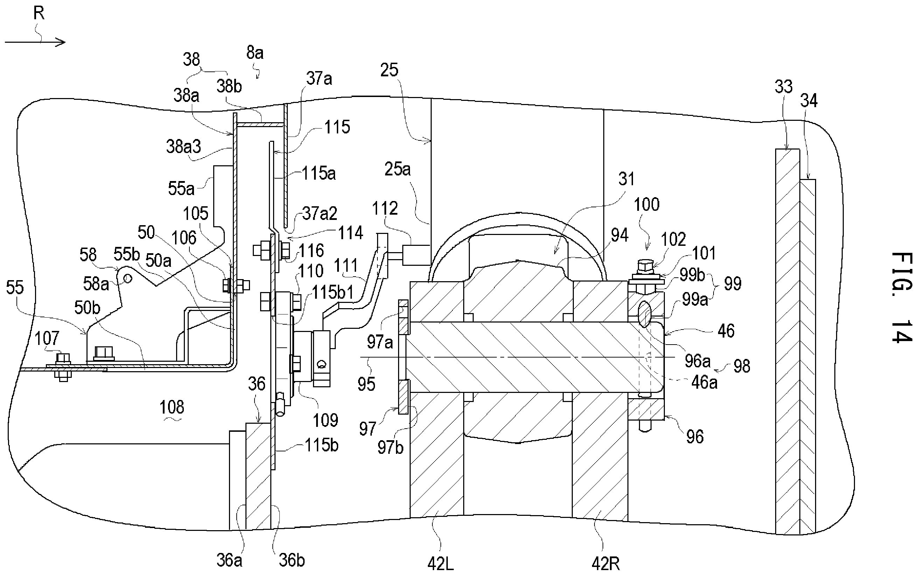

As shown in FIG. 5 and FIG. 14, the cylinder shaft part 31 is configured with the cylinder fulcrum pin 46 penetrating through a shaft center 95 of a cylindrical body 94 to which the proximal end portion 25a of the boom cylinder 25 is fixed.

The right end of the cylinder fulcrum pin 46 penetrates through the right cylinder bracket 42R, to protrude toward the tank unit 9. Onto this protruding end is fitted a right ring 96 for preventing the cylinder fulcrum pin 46 from being extracted leftward.

A first through hole 46a and a second through hole 96a having the same inner diameter are formed in the radial direction in the cylinder fulcrum pin 46 and the right ring 96, respectively. For an excavating work, a pin body 99a of an anti-extraction pin 99 is inserted through a through hole 98 formed by a combination of the first through hole 46a and the second through hole 96a.

The left end of the cylinder fulcrum pin 46 penetrates through the left cylinder bracket 42L, to protrude toward the cabin 8. Onto this protruding end is fitted and fixed a pin operation plate 97 for preventing the cylinder fulcrum pin 46 from being extracted rightward and also for installation and removal of the cylinder fulcrum pin 46.

The pin operation plate 97 has an engagement hole 97a. A pin operation jig (not shown) is engaged with the engagement hole 97a, to allow the cylinder fulcrum pin 46 to be pushed or pulled along the shaft center 95.

The anti-extraction pin 99 is provided with an anti-dropout structure 100. The anti-dropout structure 100 includes a restriction plate 101 and a fixture 102, the restriction plate 101 having its distal end portion extending to the radially outside of a pin head portion 99b of the anti-extraction pin 99, the fixture 102 fixing a proximal portion of the restriction plate 101 to an outer circumference of the right ring 96.

The restriction plate 101 is stacked on an upper end surface of a nut 102a of the fixture 102 fixed to the outer circumferential surface of the right ring 96, the restriction plate 101 including a bottom end portion 101a that serves to prevent the nut 102a from rotating. A bolt 102b is threadedly inserted through the restriction plate 101 and the nut 102a, into the right ring 96.

Thus, even when the anti-extraction pin 99 almost drops out of the through hole 98 as a result of being rotated by, for example, vibrations caused in traveling or working, the pin head portion 99b comes into abutment with a bottom surface of the restriction plate 101, so that radially outward movement is restricted, which can prevent the anti-extraction pin 99 from dropping out.

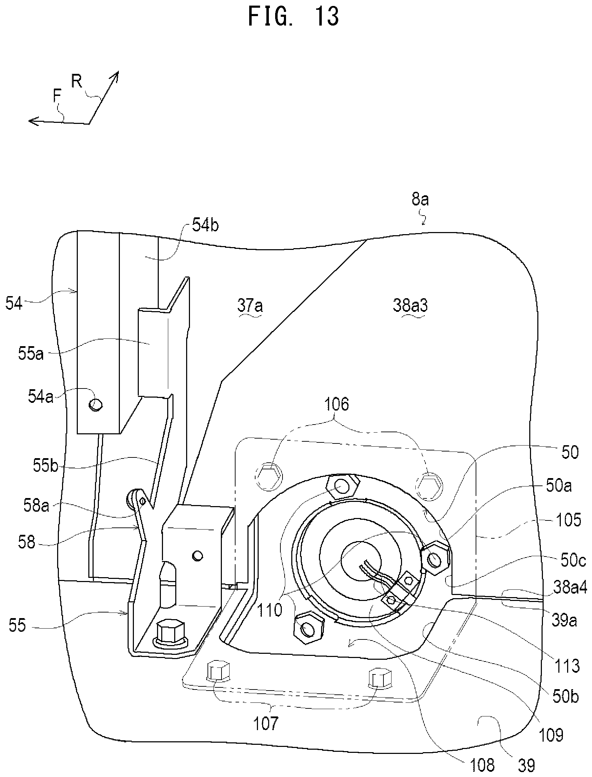

In the sheet portion 38a of the second covering 38, the work hole 50 is opened so as to extend from the front side plate 38a3 to the floor member 39, as shown in FIG. 13 and FIG. 14. The work hole 50 is made up of a vertical opening portion 50a and a lateral opening portion 50b, the vertical opening portion 50a being formed by notching the front side plate 38a3 upward from its bottom edge portion 38a4, the lateral opening portion 50b being formed by notching the floor member 39 leftward from its side edge portion 39a, the lateral opening portion 50b communicating with the vertical opening portion 50a.

Below the lateral opening portion 50b, a working space 108 is provided to allow the cylinder fulcrum pin 46 to be inserted and extracted from the cabin 8 side.

For an excavating work, the work hole 50 is covered with a closure covering 105 having an L-like shape in a front elevational view, with an upper half of the closure covering 105 fastened to the front side plate 38a3 via front and rear upper bolts 106, 106 and with a lower half of the closure covering 105 fastened to the floor member 39 via front and rear lower bolts 107, 107.

As shown in FIG. 5, FIG. 13, and FIG. 14, a front half of the sheet portion 37a of the first covering 37 has its bottom edge portion 37a2 inclined obliquely downward toward the front, and an under space 114 below the bottom edge portion 37a2 is closed by an attachment member 115 that is fixed to a right side surface 36b of the vertical plate 36.

The attachment member 115 includes a support plate portion 115a and an attachment plate portion 115b, the support plate portion 115a having tis front portion fixed to the right side surface 36b of the vertical plate 36, the attachment plate portion 115b being removably fastened to a bottom edge of the support plate portion 115a with a bolt 116. An angle sensor 109 is inserted and fitted in an attachment hole 115b1 of the attachment plate portion 115b.

The angle sensor 109 is removably secured to the attachment plate portion 115b with a plurality of bolts 110. A detector (not shown) of the angle sensor 109 is connected, by a link arm 111, to a sensor stay 112 that protrudes leftward from the proximal end portion 25a of the boom cylinder 25.

Accordingly, as the boom cylinder 25 is tilted during an excavating work, the sensor stay 112 moves frontward or rearward, to actuate the detector of the angle sensor 109 via the link arm 111, so that an angular signal from the angle sensor 109 is outputted from a lead wire 113.

To take the cylinder fulcrum pin 46 out of the cylindrical body 94 in the above-described configuration, firstly, the driver seat 11 is moved rearward, and then the device covering 40b is detached from the indoor unit 40 of the air conditioner so that the unit body 40a is exposed in the above-mentioned manner, as shown in FIG. 6 and FIG. 12.

After the bolts 53, 53 of the fixed stay 52 of the unit body 40a are loosened and detached, the unit body 40a is rotated rearward about the vertical shaft center 67 and thereby moved from the position 69 to the position 71 through the rotational support structure 48 of the moving mechanism 68, so that the unit body 40a is away from the work hole 50.

Thereafter, as shown in FIG. 5 and FIG. 13 to FIG. 15, the bolts 106, 107 are loosened and then the closure covering 105 is detached from the front side plate 38a3 and the floor member 39, while the bolts 116 are loosened and then the attachment plate portion 115b having the angle sensor 109 attached thereto is detached from the support plate portion 115a.

Moreover, the bolt 102b of the fixture 102 is loosened, and the restriction plate 101 is detached to ensure a space in the radially outside of the pin head portion 99b of the anti-extraction pin 99. Then, the pin head portion 99b is gripped, and the anti-extraction pin 99 is extracted from the through hole 98.

While the pin operation jig is engaged with the engagement holes 97a, 97a of the pin operation plate 97, the pin operation plate 97 is drawn out from the under space 114 through the working space 108 and the work hole 50, the drawing-out being implemented initially in a horizontal direction along an arrow 117 and then obliquely upward in a tilted posture toward the left along an arrow 118, thereby enabling the cylinder fulcrum pin 46 to be pulled out of the cylindrical body 94 toward the cabin 8.

On the other hand, to assemble the cylinder fulcrum pin 46 by inserting it into the cylindrical body 94, in the same manner as when taking it out of the cylindrical body 94, the unit body 40a is firstly moved away from the work hole 50 by means of the rotational support structure 48.

Then, as shown in FIG. 13 to FIG. 15, the closure covering 105 is detached from the front side plate 38a3 and the floor member 39, while the attachment plate portion 115b having the angle sensor 109 attached thereto is detached from the support plate portion 115a.

Then, while the pin operation jig is engaged with the engagement holes 97a, 97a of the pin operation plate 97, the pin operation plate 97 is pushed and moved in a tilted posture obliquely downward toward the right in a direction indicated by an arrow 119 through the work hole 50, and then pushed and moved in a horizontal posture in a direction indicated by an arrow 120. At this time, the cylinder fulcrum pin 46 is inserted into the cylindrical body 94 until a right side surface 97b of the pin operation plate 97 comes into abutment with the left cylinder bracket 42L.

Then, the anti-extraction pin 99 is inserted through the through hole 98 formed by a combination of the first through hole 46a and the second through hole 96a, so that the cylinder fulcrum pin 46 is fixed to the right ring 96, thereby enabling the boom cylinder 25 to rotate frontward or rearward about the cylinder fulcrum pin 46.

In a backhoe 1 serving as a work vehicle including: excavator equipment 4 serving as work equipment including a first boom 20 serving as a rotation member whose proximal end portion 20a is coupled to a boom fulcrum pin 45 serving as a rotatable support shaft member; a cabin 8 disposed on one side of the excavator equipment 4; and a tank unit 9 serving as a storage part disposed on the other side of the excavator equipment 4, wherein the excavator equipment 4 and the cabin 8 are provided as substantially separate members, and a right side wall 8a serving as a side wall of the cabin 8 on the excavator equipment 4 side has a work hole 49 opened therein, such that the boom fulcrum pin 45 is installable and removable through the work hole 49 by inserting and extracting the boom fulcrum pin 45 from the cabin 8 side into and out of a cylindrical body 72 having the proximal end portion 20a fixed thereto. Since the excavator equipment 4 and the cabin 8 are provided as substantially separate members, a configuration in which, for example, the vertical plate 36 serving as a boom bracket of the excavator equipment 4 does not constitute a base part of the right side wall 8a of the cabin 8 makes the excavator equipment 4 applicable to a conventional cabin 8 without requiring a large design change, thereby allowing component parts to be standardized, which can facilitate stock management of the component parts, resulting in reduction in management costs and improvement in maintenance properties.

Moreover, at a time of replacement of the boom fulcrum pin 45 of the excavator equipment 4 or detachment of the excavator equipment 4, the work hole 49 provides easy access to the boom fulcrum pin 45 from the cabin 8 side without needing to remove either the tank unit 9 or the cabin 8, and thereby installation and removal can be implemented, thus shortening a working time taken for the replacement work or the detachment work and reducing a burden on the operator.

In addition, a through hole 76 is provided that radially penetrates through the boom fulcrum pin 45 serving as the support shaft member and a right ring 73 serving as a support body that rotatably supports the boom fulcrum pin 45 on the side close to the tank unit 9 serving as the storage part, the through hole 76 including a first through hole 45a formed in the boom fulcrum pin 45 and a second through hole 73a formed in the right ring 73; an anti-rotation pin 77 serving as an anti-rotation member is provided that is insertable through a combination of the first through hole 45a and the second through hole 73a; and a visual check structure 85 is provided that enables a reference rotation position 84 to be visually checked from the cabin 8 side through the work hole 49, the reference rotation position 84 being a position that allows the anti-rotation pin 77 to be inserted. The anti-rotation pin 77 is provided on the tank unit 9 side which is remote from the cabin 8 side in order that interference with an indoor unit 40 of an air conditioner serving as an in-cabin apparatus can be avoided. Therefore, even if a rotation position of the first through hole 45a cannot be checked from the cabin 8 side, the first through hole 45a can be set in the reference rotation position 84 merely by a visual check from the cabin 8 side through the work hole 49, when assembling the boom fulcrum pin 45 by inserting it into the cylindrical body 72. This makes it easy to set the position of the first through hole 45a into the reference rotation position 84, to thereby enable shortening of a working time taken for an insertion work of inserting the boom fulcrum pin 45, reduction in a burden on the operator, and reduction in the number of operators.

In addition, the visual check structure 85 includes parallel opposed edge pairs arranged in at least two positions, and in this example, at three positions of parallel edge pairs 86, 87, and 88, between an outer peripheral edge 82c of a pin operation plate 82 serving as a cabin 8 side end portion of the boom fulcrum pin 45 serving as the support shaft member and an inner peripheral edge 49a of the work hole 49 that surrounds the outer peripheral edge 82c in a state where the first through hole 45a is in the reference rotation position 84. The visual check structure 85 can be formed of a simple configuration of just providing the parallel edge pairs 86, 87, and 88 on the outer peripheral edge 82c and the inner peripheral edge 49a. This can reduce the number of component parts, thus leading to reduction in component costs and improvement in maintenance properties.

Adjustment gaps 89, 90, and 91 are formed between the outer peripheral edge 82c and the inner peripheral edge 49a, the adjustment gaps 89, 90, and 91 allowing the boom fulcrum pin 45 serving as the support shaft member to be rotated for fine adjustment of a rotation position of the first through hole 45a with a visual check from the cabin 8 side. Accordingly, if the rotation position of the first through hole 45a is out of the reference rotation position 84, it is possible to rotate the boom fulcrum pin 45 with a margin corresponding to the adjustment gaps 89, 90, and 91. Thus, the insertion work of inserting the support shaft member can be easily performed, even when the machining accuracy, the assembling accuracy, or the like, is insufficient.

Furthermore, the indoor unit 40 of the air conditioner serving as an in-cabin apparatus disposed close to the work hole 49 is provided with a moving mechanism 68 configured to move the indoor unit 40 of the air conditioner in a direction of opening the work hole 49. Accordingly, even in a case where the indoor unit 40 of the air conditioner disposed close to the work hole 49 makes access to the work hole 49 difficult, the indoor unit 40 of the air conditioner can be easily removed from a front of the work hole 49, thus enabling further improvement in workability for various works including the replacement work of replacing the boom fulcrum pin 45 serving as the support shaft member, the detachment work of detaching the excavator equipment 4 serving as the work equipment, and the like.

### Industrial Applicability

The present invention is applicable to all of work vehicles including: work equipment including a rotation member whose proximal end portion is coupled to a rotatable support shaft member; a cabin disposed on one side of the work equipment; and a storage part disposed on the other side of the work equipment.

### Reference Signs List

- 1: backhoe (work vehicle)
- 4: excavator equipment (work equipment)
- 8: cabin
- 8a: right side wall (side wall on work equipment side)
- 9: tank unit (storage part)
- 20: first boom (rotation member)
- 20a: proximal end portion
- 40: indoor unit of air conditioner (in-cabin apparatus)
- 45: boom fulcrum pin (support shaft member)
- 45a: first through hole
- 49: work hole
- 49a: inner peripheral edge
- 68: moving mechanism
- 72: cylindrical body
- 73: right ring (support body)
- 73a: second through hole
- 76: through hole
- 77: anti-rotation pin (anti-rotation member)
- 82: pin operation plate (cabin-side end portion)
- 82c: outer peripheral edge
- 84: reference rotation position
- 85: visual check structure
- 86, 87, 88: parallel edge pair
- 89, 90, 91: adjustment gap

## Claims

1. A work vehicle (1) comprising an installation and removal structure for a support shaft member (45) of the work vehicle (1), the work vehicle (1) comprising: work equipment (4) including a rotation member (20) whose proximal end portion (20a) is coupled to a rotatable support shaft member (45); a cabin (8) disposed on one side of the work equipment (4); and a storage part (9) disposed on the other side of the work equipment (4), wherein
the work equipment (4) and the cabin (8) are provided as substantially separate members, and
a side wall (8a) of the cabin (8) on the work equipment side has a work hole (49) opened therein, such that the support shaft member (45) is installable and removable through the work hole (49) by inserting and extracting the support shaft member (45) from the cabin side into and out of a cylindrical body (72) having the proximal end portion (20a) fixed thereto,
**characterized in that**:
a through hole (76) is provided that radially penetrates through the support shaft member (45) and a support body (73) that rotatably supports the support shaft member (45) on the storage part side, the through hole (76) including a first through hole (45a) formed in the support shaft member (45) and a second through hole (73a) formed in the support body (73),
an anti-rotation member (77) is provided that is insertable through a combination of the first through hole (45a) and the second through hole (73a), and
a visual check structure (85) is provided that enables a reference rotation position (84) to be visually checked from the cabin side through the work hole (76), the reference rotation position (84) being a position that allows the anti-rotation member (77) to be inserted.

2. The work vehicle (1) according to claim 1, wherein
the visual check structure (85) includes parallel opposed edge pairs (86, 87, 88) arranged in at least two positions between an outer peripheral edge of a cabin-side end portion of the support shaft member (45) and an inner peripheral edge of the work hole (49) that surrounds the outer peripheral edge in a state where the first through hole (45a) is in the reference rotation position (84).

3. The work vehicle (1) according to claim 2, wherein
an adjustment gap (89, 90, 91) is formed between the outer peripheral edge and the inner peripheral edge, the adjustment gap (89, 90, 91) allowing the support shaft member (45) to be rotated for fine adjustment of a rotation position of the first through hole (45a) with a visual check from the cabin side.

4. The work vehicle (1) according to any one of claims 1 to 3, wherein
an in-cabin apparatus (40) disposed in the cabin (8) is provided with a moving mechanism (68) configured to move the in-cabin apparatus (40) in a direction of opening the work hole (49).

## Patentansprüche

1. Arbeitsfahrzeug (1), umfassend eine Installations- und Entfernungsstruktur für ein Träger- bzw. Stützwellenglied (45) des Arbeitsfahrzeugs (1), wobei das Arbeitsfahrzeug (1) umfasst: Arbeitsausrüstung (4) mit einem Rotationsglied (20), dessen proximaler Endabschnitt (20a) mit einem drehbaren Träger- bzw. Stützwellenglied (45) gekoppelt ist; eine Kabine (8), die auf einer Seite der Arbeitsausrüstung (4) angeordnet ist; und ein Lagerteil (9), das auf der anderen Seite der Arbeitsausrüstung (4) angeordnet ist, wobei
die Arbeitsausrüstung (4) und die Kabine (8) als im Wesentlichen separate Glieder bereitgestellt sind, und
eine Seitenwand (8a) der Kabine (8) auf der Arbeitsausrüstungsseite ein Arbeitsloch (49) darin geöffnet aufweist, so dass das Trägerwellenglied (45) durch das Arbeitsloch (49) installierbar und entfernbar ist, indem das Trägerwellenglied (45) von der Kabinenseite aus in einen zylindrischen Körper (72) eingesetzt und aus diesem herausgezogen wird, an dem der proximale Endabschnitt (20a) befestigt ist,
**dadurch gekennzeichnet, dass**:
ein Durchgangsloch (76) bereitgestellt ist, welches das Trägerwellenglied (45) und einen Stütz- bzw. Trägerkörper (73) radial durchdringt, der das Trägerwellenglied (45) auf der Lagerteilseite drehbar lagert, wobei das Durchgangsloch (76) ein erstes Durchgangsloch (45a), das in dem Trägerwellenglied (45) ausgebildet ist, und ein zweites Durchgangsloch (73a) enthält, das in dem Trägerkörper (73) ausgebildet ist,
ein Antirotationsglied (77) bereitgestellt ist, das durch eine Kombination des ersten Durchgangslochs (45a) und des zweiten Durchgangslochs (73a) einsetzbar ist, und
eine Sichtprüfstruktur (85) bereitgestellt ist, die ermöglicht, dass eine Referenzrotationsposition (84) visuell von der Kabinenseite aus durch das Arbeitsloch (76) geprüft wird, wobei die Referenzrotationsposition (84) eine Position ist, die das Einsetzen des Antirotationsglieds (77) erlaubt.

2. Arbeitsfahrzeug (1) nach Anspruch 1, wobei die Sichtprüfstruktur (85) parallele gegenüberliegende bzw. entgegengesetzte Kantenpaare (86, 87, 88) enthält, die in zumindest zwei Positionen zwischen einer Außenumfangskante eines kabinenseitigen Endabschnitts des Trägerwellenglieds (45) und einer Innenumfangskante des Arbeitslochs (49) angeordnet sind, das die Außenumfangskante in einem Zustand umgibt, in dem sich das erste Durchgangsloch (45a) in der Referenzrotationsposition (84) befindet.

3. Arbeitsfahrzeug (1) nach Anspruch 2, wobei ein Einstellspalt (89, 90, 91) zwischen der Außenumfangskante und der Innenumfangskante ausgebildet ist, wobei der Einstellspalt (89, 90, 91) ermöglicht, dass das Trägerwellenglied (45) zur Feineinstellung einer Rotationsposition des ersten Durchgangslochs (45a) mit einer Sichtprüfung von der Kabinenseite aus gedreht wird.

4. Arbeitsfahrzeug (1) nach einem der Ansprüche 1 bis 3, wobei eine kabineninterne Vorrichtung (40), die in der Kabine (8) angeordnet ist, mit einem Bewegungsmechanismus (68) versehen ist, der konfiguriert ist, die kabineninterne Vorrichtung (40) in einer Öffnungsrichtung des Arbeitslochs (49) zu bewegen.

## Revendications

1. Véhicule de travail (1) comprenant une structure de mise en place et de dépose destinée à un élément d'arbre de support (45) du véhicule de travail (1), le véhicule de travail (1) comprenant : un équipement de travail (4) comportant un élément tournant (20) dont la partie d'extrémité proximale (20a) est couplée à un élément d'arbre de support pouvant tourner (45) ; une cabine (8) disposée d'un premier côté de l'équipement de travail (4) ; et une partie de stockage (9) disposée de l'autre côté de l'équipement de travail (4), dans lequel
l'équipement de travail (4) et la cabine (8) étant agencés sous forme d'éléments sensiblement distincts, et
une paroi latérale (8a) de la cabine (8) du côté de l'équipement de travail comporte, à l'intérieur, un orifice de travail (49) ouvert, de telle sorte que l'élément d'arbre de support (45) peut être mis en place et déposé à travers l'orifice de travail (49) en insérant l'élément d'arbre de support (45) à partir du côté de la cabine dans un corps cylindrique (72) sur lequel est fixée la partie d'extrémité proximale (20a) et en l'extrayant de ce dernier,
**caractérisé en ce que** :
un orifice traversant (76) est agencé de telle sorte qu'il pénètre radialement à travers l'élément d'arbre de support (45) et un corps de support (73) qui supporte avec possibilité de rotation l'élément d'arbre de support (45) du côté de la partie de stockage, l'orifice traversant (76) comportant un premier orifice traversant (45a) formé sur l'élément d'arbre de support (45) et un second orifice traversant (73a) formé sur le corps de support (73),
un élément de blocage en rotation (77) est agencé de telle sorte qu'il peut être inséré à travers une combinaison du premier orifice traversant (45a) et du second orifice traversant (73a), et
une structure de contrôle visuel (85) est agencée de telle sorte qu'elle permet le contrôle visuel d'une position angulaire de référence (84) à partir du côté de la cabine à travers l'orifice de travail (76), la position angulaire de référence (84) étant une position qui permet l'insertion de l'élément de blocage en rotation (77).

2. Véhicule de travail (1) selon la revendication 1, dans lequel
la structure de contrôle visuel (85) comporte des paires de bords opposés parallèles (86, 87, 88) agencées à au moins deux emplacements entre un bord périphérique externe d'un partie d'extrémité du côté cabine de l'élément d'arbre de support (45) et un bord périphérique interne de l'orifice de travail (49) qui entoure le bord périphérique externe dans un état dans lequel le premier orifice traversant (45a) est dans la position angulaire de référence (84).

3. Véhicule de travail (1) selon la revendication 2, dans lequel
un espace de réglage (89, 90, 91) est formé entre le bord périphérique externe et le bord périphérique interne, l'espace de réglage (89, 90, 91) permettant la rotation de l'élément d'arbre de support (45) afin d'assurer un réglage fin d'une position angulaire du premier orifice traversant (45a) avec un contrôle visuel à partir du côté cabine.

4. Véhicule de travail (1) selon l'une quelconque des revendications 1 à 3, dans lequel
un dispositif interne à la cabine (40) disposé dans la cabine (8) comporte un mécanisme de déplacement (68) configuré de manière à déplacer le dispositif interne à la cabine (40) suivant une direction d'ouverture de l'orifice de travail (49).
